# EUROPÄISCHE PATENTSCHRIFT

(11) **EP 1 010 402 B1**
(45) Veröffentlichungstag und Bekanntmachung des Hinweises auf die Patenterteilung: **24.09.2003**
(21) Anmeldenummer: 98123815.7
(22) Anmeldetag: 15.12.1998
(51) Int. Cl.: A61C 13/097

(54) **Zahnersatz mit auch für Prothesen geeigneten künstlichen Zähnen**
Dental prosthesis with artificial teeth
Prothèse dentaire comportant des dents artificielles

(43) Veröffentlichungstag der Anmeldung: 21.06.2000
(73) Patentinhaber: Fundamental Schulungslabor Arnold + Osten KG, 45355 Essen (DE)
(72) Erfinder: Brosch, Volker, 45355 Essen (DE); Arnold, Wolfgang, 45359 Essen (DE)
(74) Vertreter: Schulte, Jörg, Dipl.-Ing.

(56) Entgegenhaltungen:
- CH-A- 87 851
- DE-A- 4 432 176
- US-A- 2 620 562

## Beschreibung

Die Erfindung betrifft einen Zahnersatz gemäß Anspruch 1.

Die Zähne dienen vor allem zum Zerkleinern der Nahrung, aber auch zum Sprechen. An den Zähnen unterscheidet man die Krone, die aus dem Zahnfleisch heraus in die Mundhöhle ragt, den Zahnhals, der vom Zahnfleisch vor allen Dingen umgeben ist und die einfache oder geteilte Zahnwurzel, die endseitig eine Öffnung für Nerven besitzt. Beim erwachsenen Menschen besteht das aus Ober- und Unterkiefer bestehende Gebiss aus Schneidezähnen, den Eckzähnen, den Seitenzähnen oder Prämolaren und den Backenzähnen oder Molaren. Die Seitenzähne sind niedriger aufgebaut und verfügen über eine zweihöckrige Krone, während die Backenzähne bzw. Molaren eine breite bis fünfhöckrige Krone aufweisen. Beim Zahnersatz werden künstliche Zahnkronen, ganze Ersatzzähne oder vollständige Zahnprothesen verwendet, um so die Kaufunktion sicherzustellen. Ersatzzähne werden in der Regel mit noch vorhandenen Zähnen verbunden, die dazu eine Krone erhalten. Herausnehmbarer Zahnersatz ist dann erforderlich, wenn ein Großteil der natürlichen Zähne nicht mehr vorhanden ist oder gar alle Zähne entfernt werden mussten. Solche Teil- oder Vollprothesen bestehen heute meist aus Kunststoff, in den die Ersatzzähne eingebettet sind. Nachteil bei den vorhandenen Ersatzzähnen und Prothesen ist, dass sie sich in aller Regel vereinfachend von den natürlichen Zähnen unterscheiden und dass sich der Benutzer nicht nur an die Zähne als solche, sondern auch an ihre von den ursprüngliche Zähnen abweichende Form und Bisseigenschaft gewöhnen muss. Hinzu kommt, dass das Kiefergelenk auf kleine Änderungen bereits reagiert, sodass zeitweise oder auch auf Dauer auf den Einsatz des Zahnersatzes verzichtet wird.

Der Erfindung liegt die Aufgabe zugrunde, im vorhandenen Lückengebiss einfach und ohne große Einschleifmaßnahmen verwendbare, vor allem auch in der Prothese einsetzbare Ersatzzähne zu schaffen, die äußerlich und von der Funktion optimierten Echtzähnen entsprechen.

Die Aufgabe wird gemäß der Erfindung dadurch gelöst, dass die Ersatzzähne mit multifunktionalen Kauflächen nach natürlichem Vorbild ausgerüstet sind, ein vergrößertes Volumen aufweisen und einen ein Durchscheinen der Zahnhälse verhinderden, bukkal abgesetzten Zahnhals aufweisend ausgebildet sind.

Mit einem derartigen Zahnersatz ist es möglich, egal, ob einzelne Ersatzzähne zum Einsatz kommen oder aber eben eine Gruppe solcher neuen Zähne verwendet wird, der Benutzer entweder gar nicht merkt, dass Ersatz eingesetzt worden ist oder höchstens in positiver Hinsicht, weil er merkt, dass seine Zähne optimaler sitzen und funktionieren. Dies erreicht man dadurch, dass die Ersatzzähne besondere Kauflächen aufweisen, die egal von der jeweiligen Stellung des Gebisses miteinander kooperieren. Diese besondere Form, insbesondere der Kauflächen, führt zu der beschriebenen größeren Akzeptanz und der verbesserten Funktion des Gebisses, wobei dies durch das vergrößerte Volumen der Ersatzzähne und die besondere Ausbildung des Zahnhalses noch verbessert wird. Durch das vergrößerte Volumen ist ein Einpassen in das Lückengebiss oder auch in den vollständigen Zahnersatz optimal möglich, wobei in der Regel sogar auf Einschleifmaßnahmen verzichtet werden kann. Der bukkal abgesetzte Zahnhals verhindert ein Durchscheinen, was ansonsten aufgrund des verwendeten Kunststoffmaterials zu befürchten wäre. Bisslagen der Angle-Klassen I - III können ohne große Einschleifmaßnahmen versorgt werden.

Zum Erreichen der multifunktionalen Kauflächen ist gemäß der Erfindung vorgesehen, dass die zentralen Kontaktpunkte der Kaufläche auf gleichem Niveau bezüglich Randleisten und auch Grube liegend ausgebildet sind. Dadurch, dass die zentralen Kontakte auf den Randleisten und in der Grube auf einem Niveau liegen, ist sichergestellt, dass ein optimaler Biss erreicht wird, wenn der Benutzer, egal, ob es sich um eine Teil- oder Vollprothese handelt, Ober- und Unterkiefer aufeinander setzt und die Kaufunktion ausübt.

Nach einer zweckmäßigen Ausbildung der Erfindung ist weiter vorgesehen, dass die distalen Randleisten der Unterkiefer-Prämolaren erhöht ausgebildet sind. Die weiter weg liegenden Randleisten sind erhöht, um so eine gleichmäßige "Führung" der einzelnen Kiefer aufeinander zu erreichen.

Die palatinalen Höcker der Oberkiefer-Prämolaren sind zweckmäßigerweise zur Mitte versetzt bzw. bewegt, um so den richtigen Biss zu sichern.

Die Ersatzzähne sind bei vorhandenem Lückengebiss sehr variabel aufstellbar, weil die Höcker-Fossa- und die Höcker-Randleisten-Beziehungen aufeinander abgestimmt sind. Eine weitere Optimierung ist gegeben, wenn die bukkale Höckerspitze des ersten Oberkiefer-Prämolaren distalisiert ausgebildet ist. Sie ist also etwas von der Mitte weggesetzt angeordnet bzw. verwirklicht.

Ebenfalls zur Optimierung der Kaufunktion ist vorgesehen, dass die Höcker eine Neigung aufweisen, die von den Prämolaren zu den Molaren abnimmt. Hiermit wird den unterschiedlichen Funktionen der Prämolaren und der Molaren Rechnung getragen, wobei also die Höcker bei den Molaren flacher ausgebildet sind und damit der Mahlfunktion besser entsprechen können.

Schließlich ist es für das Erreichen der multifunktionalen Kauflächen von Vorteil, wenn die transversale Größe des okklusalen Feldes bei allen Prämolaren einer Garnitur gleich ist. Gerade die den Übergang zu den Eck- und Schneidezähnen bildenden Seitenzähne bzw. Prämolare sind für das Erreichen optimaler Kauflächen besonderes wichtig, wobei sich derart ausgebildete Ersatzzähne optimal sowohl in ein vorhandenes Gebiss einsetzen, wie auch mit anderen Ersatzzähnen zusammen zu einer Prothese zusammenfügen lassen.

Die Eckzähne sind häufig im Übergang zu Teilprothesen die Zähne, an denen die Ersatzzähne festgelegt werden können. Um hier Schwierigkeiten, insbesondere beim Kauen, zu vermeiden ist vorgesehen, dass bei vorhandenen natürlichen Eckzähnen die Prämolaren eine größere Länge und die Integrierung von extrakoronalen Geschieben ermöglichende Größe aufweisen. Damit ist ein Niveauunterschied zwischen den Prämolaren und den noch vorhandenen, natürlichen Eckzähnen vermieden und darüber hinaus ist ein Unterbringen entsprechender Geschiebe möglich, ohne dass diese beim fertigen Gebiss erkennbar sind. Die extrakoronalen Geschiebe können in den Zahn so integriert werden, dass damit die Verbindung mit weiteren Zähnen möglich ist, ohne dass dies von außen her erkennbar wird. Dennoch bleibt es dabei, dass die Zahnbreite der natürlicher Zähne entspricht. Auch von außen her ist somit eine Veränderung am Gebiss nicht erkennbar.

Zur möglichst naturgetreuen Nachbildung einer Teilprothese oder einer Ganzprothese ist es erforderlich, die Ersatzzähne in entsprechend dem Zahnfleisch entsprechenden Kunststoff einzubetten. Um dabei möglichst Zahnlücken zu vermeiden bzw. diese klein zu halten, ist vorgesehen, dass die Leisten zur Reduzierung der Interdentalpapillen in Kunststoff approximal ausgebildet sind. Von basal sind die Leisten deutlich zu erkennen. Die Interdentalpapillen können aber auf diese Weise so klein gehalten werden, dass die Prothese so ohne weiteres nicht als Prothese erkennbar ist.

Zum Zahnersatz gehören neben den Molaren und den Prämolaren auch die Eckzähne und vor allem die Frontzähne. Auch hier wird bei Prothesen und Teilprothesen die Natur praktisch "wiederhergestellt", indem die labialen Leisten bei den Frontzähnen enger zusammen sind als die oralen Leisten. Dadurch ergibt sich eine schöne Zahnstellung und ein echt enger Zahnstand, ohne dass dieser Zahnstand als künstlich erkannt wird. Ebenso vorteilhaft ist, dass die Labialflächen bei den Frontzähnen verwunden ausgebildet sind. Diese auch als Twist bezeichnete Stellung oder Ausbildung bringt optimalen Zahnersatz, egal, ob es sich um einen einzelnen Zahn bzw. Ersatzzahn oder um mehrere derartige Frontzähne handelt.

Ein auch optisch guten Sitz des "Zahnfleisch-Kunststoffes" erreicht man, wenn die oralen Randleisten der Frontzähne sich nach inzisal öffnend ausgebildet sind. Weiter von Vorteil ist es, wenn der Zahnzwischenraum asymmetrisch geformt ist, zumal dann eine gute Anpassung an die Ersatzzähne möglich ist.

Schließlich ist die Modellation der Interdentalpapillen besonders günstig möglich, wenn die Leisten beim Frontzahn approximale Nasen aufweisen, über die das Zahnfleisch quasi fixiert werden kann. Insgesamt gesehen ergibt sich somit ein dem Original-Gebiss sehr ähnliches Prothesengebiss.

Die Zahnoberfläche als solche ist den Naturzähnen angepasst strukturiert, sodass sich auch von der Front her gerade bei den Schneidezähnen nicht auf den ersten Blick erkennen lässt, dass es sich um Ersatzzähne handelt. Sie haben auch von den großen sichtbaren Flächen her eben ein natürliches Aussehen. Von der anderen Seite her ist vorgesehen, dass die oralflächen der Frontzähne konkav gewölbt ausgebildet sind, sodass sich die gezielten Labialflächen ergeben und die besondere Form des Schneidezahnes, der aufgrund dieser besonderen Form seine Funktion wie auch der natürliche Zahn erfüllen kann.

Die Erfindung zeichnet sich insbesondere dadurch aus, dass ein Prothesenzahn bzw. ein Zahnersatz geschaffen ist, der dem natürlichen Vorbild annähernd entspricht, dies sowohl bezüglich der multifunktionalen Kauflächen als auch vom Aussehen her gesehen. Damit können Ersatzzähne bei vorhandenem Lückengebiss sehr variabel aufgestellt und die entsprechenden Bisslagen ohne große Einschleifmaßnahmen dargestellt werden. Der Zahnersatz als solcher kann also gut verarbeitet werden und erfüllt dann eine Funktion, die der natürlicher Zähne entspricht und zwar sowohl aufgrund der entsprechenden Kauflächen, wie auch der gesamten Ausbildung des Ersatzzahnes. Erreicht wird damit ein Ersatzzahn der voll die Funktion des natürlichen Zahnes übernehmen kann, ohne dass er sich von den umgebenden natürlichen Zähnen abhebt oder aber bei der Vollprothese sofort und unzweideutig erkennen lässt, dass es sich hier eben um eine Prothese handelt. Vielmehr ist auch durch das Aussehen der Ersatzzähne sichergestellt, dass insbesondere der Laie überhaupt nicht erkennt, dass es sich um eine Prothese handelt. Damit ist die Akzeptanz von solchen Teil- oder Ganzprothesen erleichtert und dennoch die Möglichkeit gegeben, die Ersatzzähne praktisch fabrikmäßig, d. h. in großen Stückzahlen, herzustellen. Sie lassen sich genauso einfach herstellen wie bisherige Prothesenzähne, haben aber den Vorteil, dass sie sich besser verarbeiten lassen und dass sie in der Funktion und im Aussehen natürlichen Zähnen entsprechen. Auch wird durch die besondere Art der Ersatzzähne der Gegebenheit entsprochen, dass das Gebiss als solches schrumpft. Die Multifunktionale Kaufläche ermöglicht vor allem in der Totalprothetik eine Aufstellung nach vielen Systemen, wobei dem entgegen kommt, dass die Zahngarnituren für Totalprothesen und für Teilprothesen bzw. den Zahnersatz identisch sind. Das Volumen großer Zahngarnituren ist auf die Anforderungen in der partiellen Prothese insbesondere abzustimmen, wird das Volumen bei Auswahl kleiner Zahngarnituren zielgerichtet für die Totalprothesen geeignet ist. Vom Grundsatz her handelt es sich aber um die gleichen Ersatzzähne.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Totalprothese für den Unterkiefer,
- Fig. 2: aufeinander liegende Ersatzzähne im hinteren Mundbereich,
- Fig. 3: die entsprechenden Ersatzzähne des Ober- und Unterkiefers in einer ersten Bissstellung,
- Fig. 4: die Ersatzzähne nach Fig. 3 in einer zweiten Bissstellung,
- Fig. 5: die Ersatzzähne nach Fig. 3 und Fig. 4 in einer dritten Bissstellung,
- Fig. 6: die Prämolaren von oral gesehen,
- Fig. 7: die Prämolaren von bukkal gesehen,
- Fig. 8: die entsprechenden Prämolaren des Oberkiefers von oral gesehen,
- Fig. 9: die beiden Prämolaren mit eingezeichnetem Höcker-Neigungswinkel,
- Fig. 10: die Prämolaren mit integriertem Geschiebe,
- Fig. 11: die Darstellung nach Fig. 10 mit offen liegendem Geschiebe,
- Fig. 12: den teilweise auf das Geschiebe aufgesetzten Prämolar von der Vorderseite her gesehen,
- Fig. 13: den auf das Geschiebe aufgesetzten ersten Prämolar in Draufsicht,
- Fig. 14: einen Prämolar in Seitenansicht,
- Fig. 15: die Prämolaren gem. Fig. 14 in Vorderansicht,
- Fig. 16: einen Prämolar mit approximalen Leisten,
- Fig. 17: einen Frontzahn mit natürlicher Oberflächenstruktur,
- Fig. 18: zwei Schneidezähne vom Mundraum aus gesehen,
- Fig. 19: die Schneidezähne in Draufsicht mit Labialflächen,
- Fig. 20: die Schneidezähne in Draufsicht,
- Fig. 21: einen Schneidezahn von oral gesehen in Einzeldarstellung,
- Fig. 22: Schneidezähne in Vorderansicht mit gesondert gekennzeichneten Optimalflächen,
- Fig. 23: eine vergrößerte Wiedergabe der Schneidezähne in Vorderansicht mit entsprechend ausgebildetem Zahnfleisch-Kunststoff,
- Fig. 24: einen der Schneidezähne vom Zahnhals aus gesehen und
- Fig. 25: den Schneidezahn nach Fig. 24 in Vorderansicht.

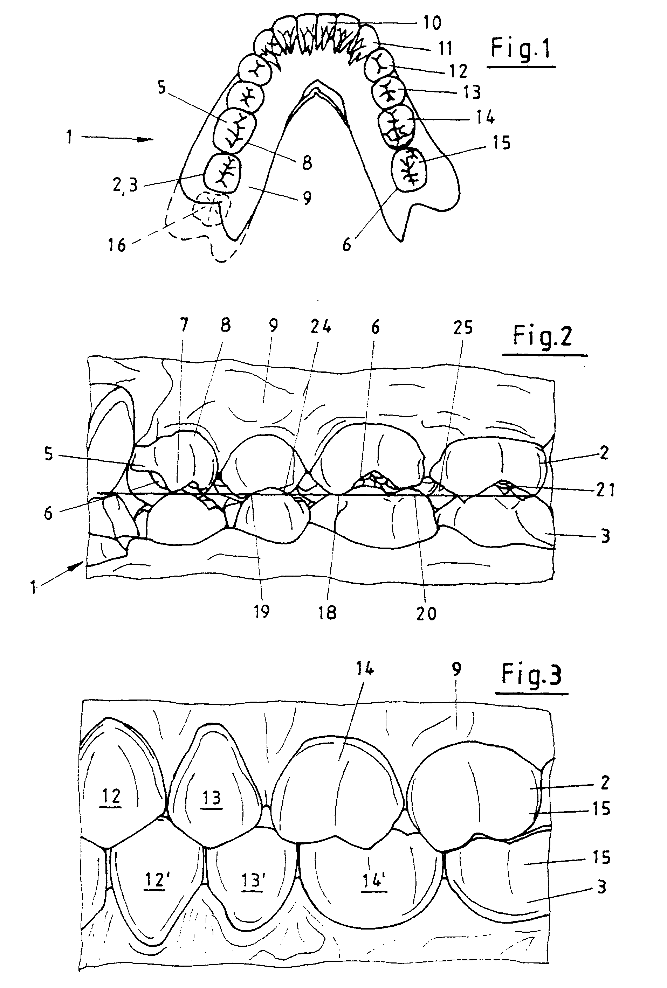

Fig. 1 zeigt eine Zahnprothese 1, bestehend aus der oberen Zahnreihe 2 und unteren Zahnreihe 3, wobei Fig. 1 allerdings nur die untere Zahnreihe 3 wiedergibt. Diese Zahnprothese 1 besteht aus mehreren Ersatzzähnen 5, die eine besonders ausgeprägte Kaufläche 6 aufweisen und darüber hinaus einen stabilen Zahnkorpus 7. Der eigentliche Zahnkorpus 7 ist mit dem Zahnhals 8 in der Kunststoffmasse 9 festgelegt.

Bei der in Fig. 1 wiedergegebenen Zahnprothese 1 sind insgesamt vier Schneidezähne 10, zwei Eckzähne 11, vier Prämolaren 12, 13 und vier Molaren 14, 15 dargestellt. Die Prämolaren 12, 13 sind die Seitenzähne, die Molaren 14, 15 die sogenannten breiten Backenzähne. Der Weisheitszahn oder dritte Molar 16 ist auf der linken Seite nur angedeutet.

Die beiden aufeinander liegenden Zahnreihen 2, 3 sind in Fig. 2 ausschnittsweise wiedergegeben, wobei deutlich gemacht ist, dass die verschiedenen Kontaktpunkte 18, 19 auf den Randleisten 20 und auch in der Grube 21 auf einem Niveau liegen. Die entsprechende Linie bzw. Niveau ist angezeigt.

Die Figuren 3, 4 und 5 zeigen die in Fig. 2 angedeuteten Prämolare 12, 13, 12', 13' und die Molaren 14, 15 bzw. 14', 15', aufeinander liegend. Deutlich zeigen diese Fig. 3 bis 5, dass je nach Stellung der oberen Zahnreihe 2 bzw. unteren Zahnreihe 3 immer ein optimaler Kontakt zwischen beiden Zahnreihen 2, 3 vorhanden ist, weil eine solche Garnitur für Höcker-Fossa- und Höcker-Randleisten-Beziehungen optimale Bedingungen darstellt. Die entsprechenden Ersatzzähne 5 sind bei vorhandenem Lükkengebiss sehr variabel aufstellbar. Die Fig. 3 bis 5 zeigen weiter, dass sowohl bei den Bisslagen der Angle-Klassen I, wie auch II, wie auch III eine Versorgung ohne große Einschleifmaßnahmen möglich ist.

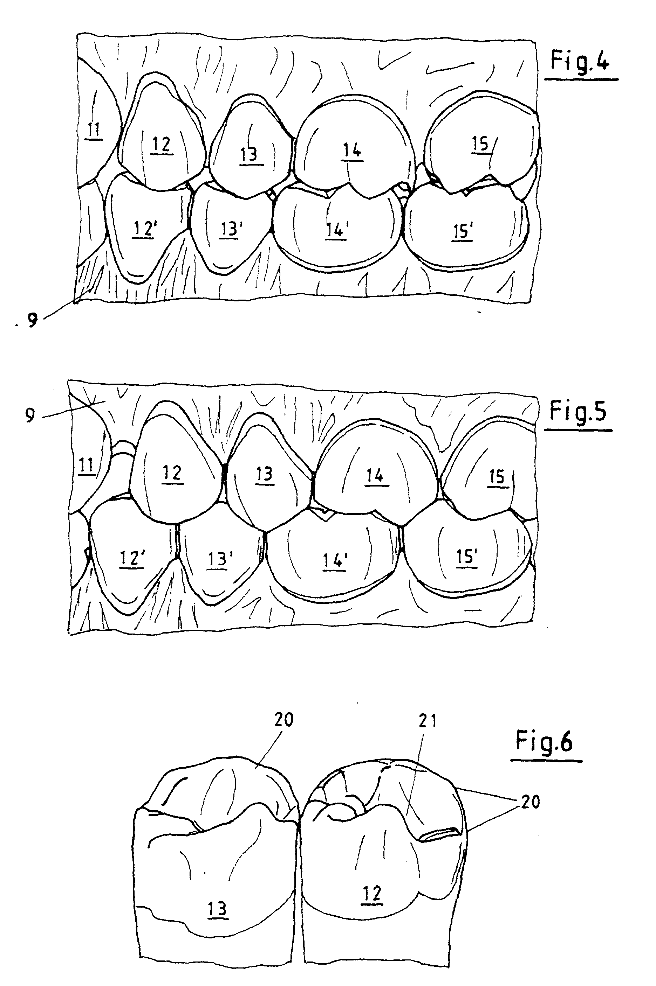

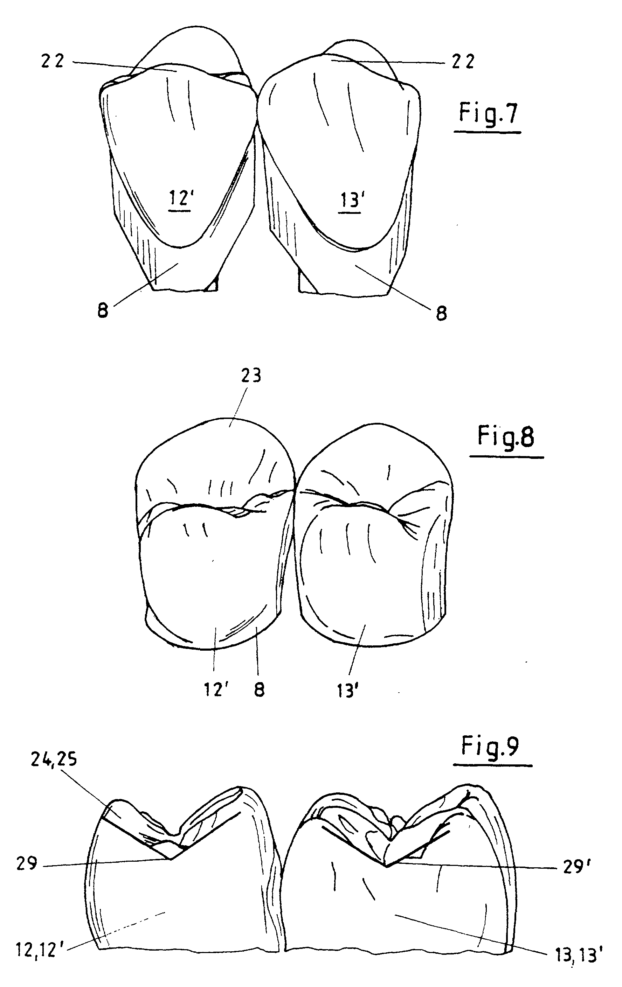

Die Figuren 6 und 7 zeigen Seitenzähne bzw. Prämolaren 12, 13 und 12', 13', wobei Fig. 6 die Unterkiefer-Prämolaren 12, 13 mit ihren erhöhten distalen Randleisten zeigt. Fig. 7 dagegen zeigt die Oberkiefer-Prämolaren 12', 13', wobei deutlich wird, dass die palatinalen Höcker 22 mesialisiert ausgebildet, d. h. aus der Mitte verschoben sind. Deutlich erkennbar sind auch hier die besonders ausgebildeten und weiter hinten noch erläuterten Zahnhälse 8 bei den Prämolaren 12', 13'.

Fig. 8 zeigt die Oberkiefer-Prämolaren 12', 13' gemäß Fig. 7, wobei hier die Ansicht aus dem Mundraum heraus wiedergegeben ist. Erkennbar sind die distalisierten, bukkalen Höckerspitzen der ersten Prämolaren 12', wobei die entsprechende Hökkerspitze mit 23 bezeichnet ist.

Fig. 9 zeigt zwei Prämolaren 12, 13, 12', 13' bei denen deutlich gemacht ist, dass sich der Neigungswinkel 29 in Richtung Molaren 14, 15 verkleinert. Erkennbar ist hier das okklusale Feld 24 bzw. 25.

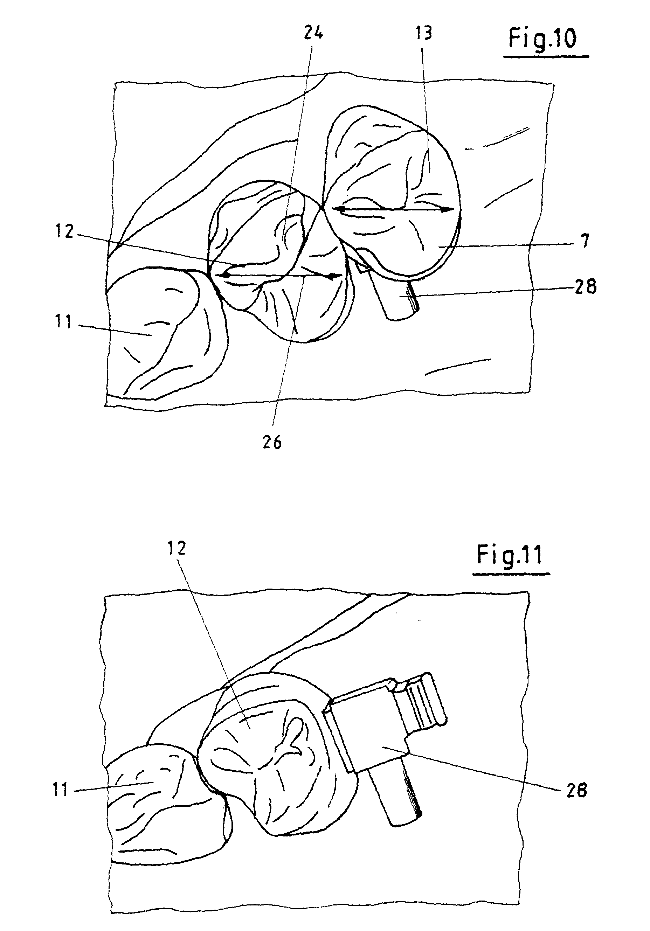

Fig. 10 und Fig. 11 zeigen eine Ausführung bei der dem zweiten Prämolar 13 bzw. auch 13' ein Geschiebe 28 zugeordnet ist, wobei Fig. 11 dieses Geschiebe 28 in Alleinstellung zeigt. Die einzelnen Ersatzzähne 5 bzw. die Prämolaren 12, 13 sind von ihrer Größe her so bemessen, dass ein derartiges Geschiebe 28 vollständig in den Zahnkorpus 7 integriert werden kann. Zur Verdeutlichung der Größe dieser Ersatzzähne 5, 12, 13 ist die Transversale eingezeichnet, die bei allen Seitenzähnen bzw. Prämolaren 12, 13 einer Garnitur gleich groß sein soll. Das okklusale Feld 24 ist hier gezeigt, wobei das okklusale Feld 25 der hier nicht dargestellten Molaren 14, 15 ähnlich ausgebildet ist, nur eben mehr Höcker aufweist.

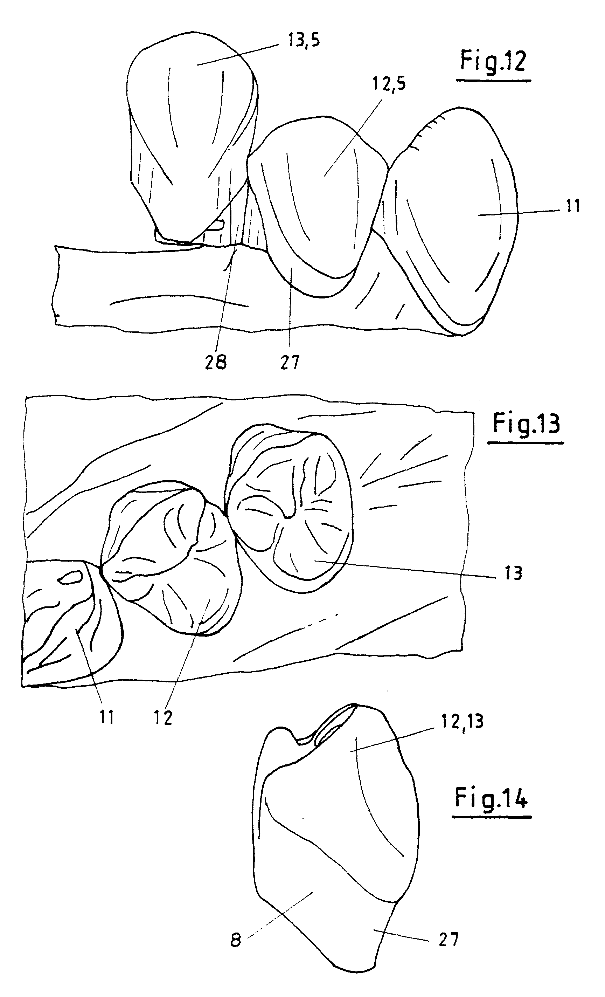

Die Darstellung nach Fig. 12 verdeutlicht, dass der jeweilige Ersatzzahn 5 bzw. 13 auf das entsprechende Geschiebe 28 aufgebracht werden kann, sodass er gemäß Fig. 13 mit dem benachbarten Prämolar 12 und den hier nicht dargestellten Molaren 14, 15 eine durchgehende Zahnreihe bilden kann, insbesondere wenn die Prämolaren 12 und die Molaren 14, 15 noch Naturzähne sind.

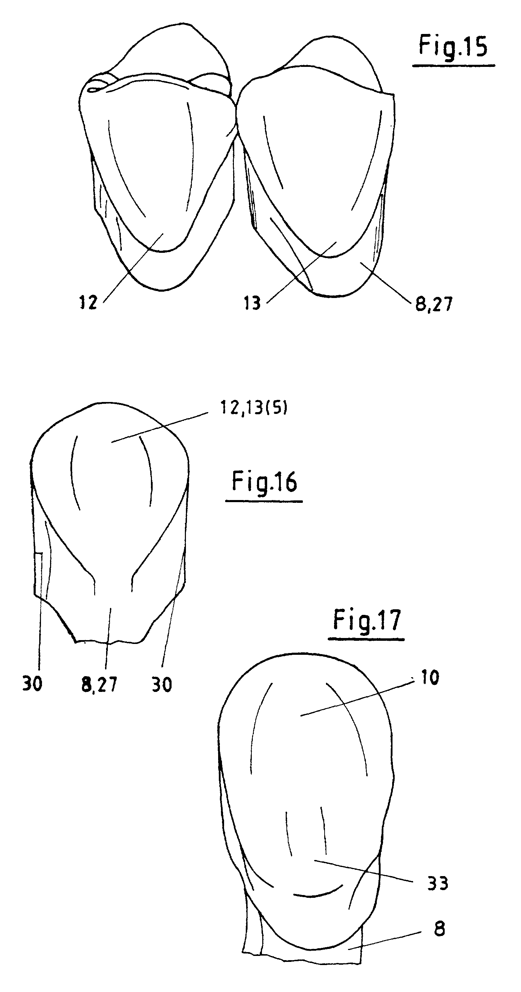

Erkennbar beim hier auch als Ersatzzahn 5 ausgebildeten Prämolaren 12, dass er über einen ausgeprägten bukkalen Zahnhals 27 verfügt, der ein Durchscheinen der Masse des Ersatzzahnes 5 verhindert. Noch deutlicher wird dies anhand der Fig. 14 und 15, wo die entsprechenden Prämolaren 12 bzw. auch 13 in Seitenansicht und in vergrößerter Vorderansicht wiedergegeben sind und zwar mit den entsprechend ausgeprägten Zahnhälsen 8 bzw. 27. Erkennbar ist hier auch schon, dass die einzelnen Prämolaren 12 und auch 13 eine Oberfläche aufweisen, die in ihrer Struktur der natürlicher Zähne entspricht.

Fig. 16 zeigt noch einmal einen Prämolaren 12 oder 13 von der Lippe her gesehen, um zu verdeutlichen, dass dieser Ersatzzahn 5 über ausgeprägte Leisten 30 verfügt, die als approximale Leisten 30 ausgebildet sind, sodass sich die Interdentalpapillen, die hier nicht wiedergegeben sind, leicht anpassen lassen.

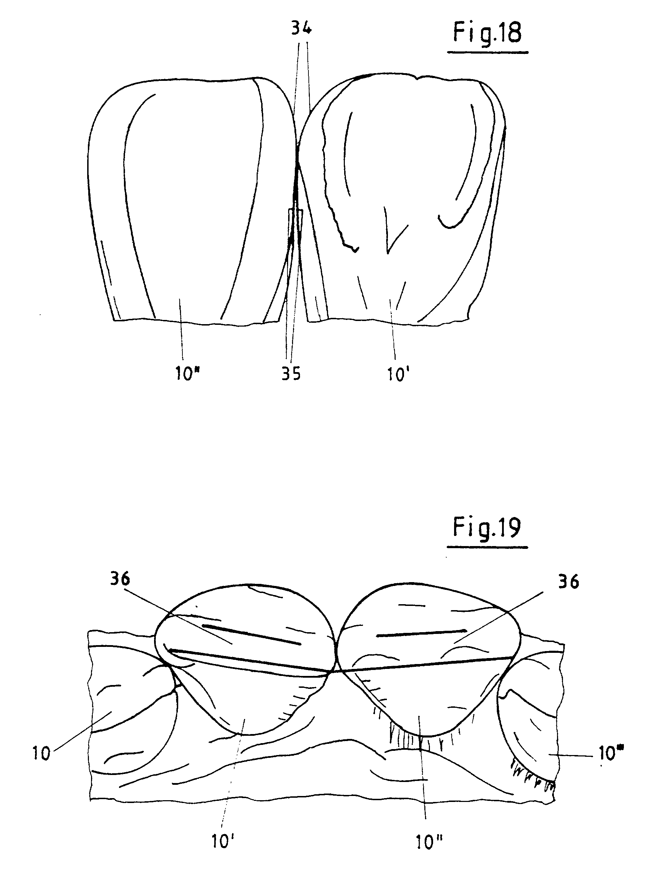

Fig. 17 zeigt einen Schneidezahn 10 von der Lippe her gesehen, wobei deutlich wird, dass hier eine Oberflächenstruktur 33 gewählt ist, die der natürlicher Zähne angepasst ist bzw. sogar entspricht. Ein solcher Zahn, der mit seinem Zahnhals 8 bis in die hier nicht dargestellte Kunststoffmasse 9 hineinreicht, kann so entweder in eine Zahnlücke eingesetzt oder mit anderen zusammen eine Zahnprothese 1 bilden, die von einem natürlichen Gebiss kaum zu unterscheiden ist.

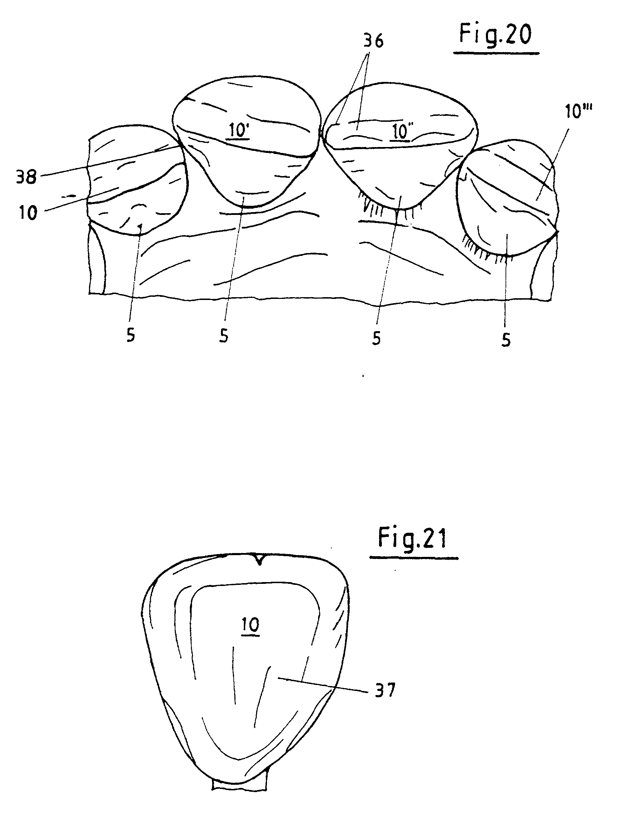

Die Schneidezähne 10, 10', 10", 10"' sind in Fig. 18 vom Mundinnenraum her gesehen dargestellt und nach Fig. 19 in Draufsicht. Erkennbar ist, dass die Schneidezähne 10', 10'' labiale Leisten 34 aufweisen, die enger zusammenstehen, als die oralen Leisten 35. Dadurch ergibt sich von der Vorderfront her gesehen ein geringerer Abstand als im Bereich, der dem Mundinneren zugewandt ist. Erkennbar ist außerdem, die in Fig. 21 noch einmal deutlich hervorgehobene konkav ausgebildete Oralfläche 37.

In Fig. 19 sind die Labialflächen 36 wiedergegeben, die verwunden ausgebildet sind und einen optimalen Biss ermöglichen.

Fig. 20 ist wiedergegeben, um zu verdeutlichen, dass die orale Randleiste 38 nach inzisal sich öffnend ausgebildet ist. Hierdurch ergibt sich der aus Fig. 20 ersichtliche, natürliche Stand der Ersatzzähne 5, hier in Form der verschiedenen Schneidezähne 10, 10', 10", 10"'.

Auch Fig. 21 war bereits hingewiesen worden, hier mit der konkav gebogenen Oralfläche 37.

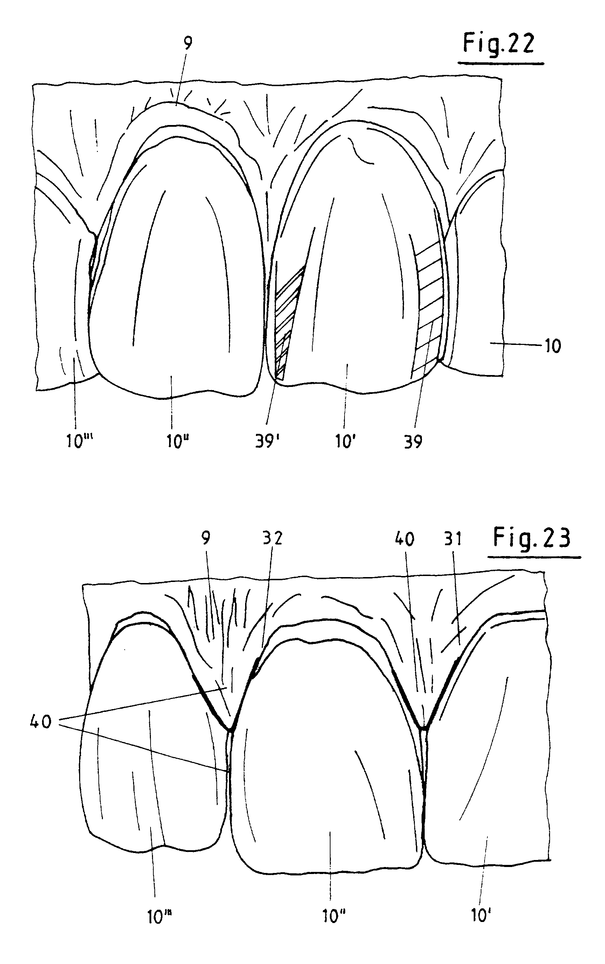

Fig. 22 zeigt vor allem die beiden Schneidezähne 10', 10" von der Lippe her gesehen, wobei deutlich wird, dass die distale Approximalfläche 39 größer ist als die mediale Approximalfläche 39'. Eine gute Einpassbarkeit dieser Ersatzzähne 5 ist gegeben, wobei sich die in Fig. 23 angezeigten günstigen Zahnzwischenräume 40 ergeben, in die die Kunststoffmasse 9 so eingeformt ist, dass die Interdentalpapille 31 und 32 sowohl wegen der Gebissdarstellung als auch wegen der Halterung der einzelnen Ersatzzähne 5 eine optimale Form erreichen können.

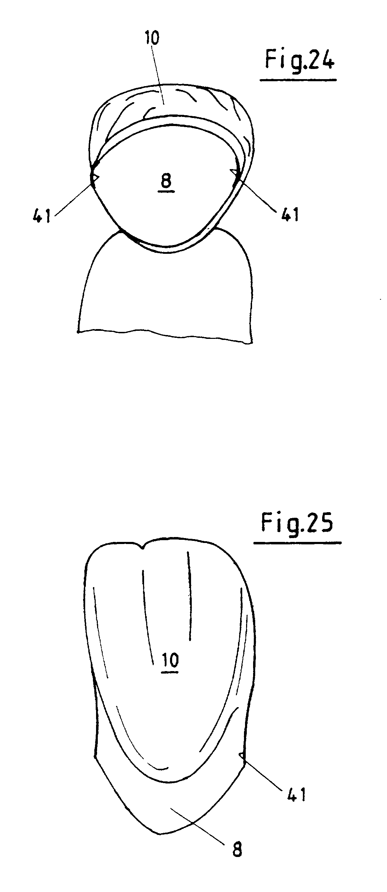

Die Modellation der Interdentalpapillen 31, 32 ist schnell und einfach möglich, wobei dem noch unterstützend die besondere Form der Zahnhälse 8 entgegen kommt, wie anhand der Fig. 24 und 25 erläutert wird. Die hier als approximalen Nasen 41 wiedergegebenen Vorsprünge ermöglichen sowohl ein gutes Festlegen in der Kunststoffmasse 9, wie auch eine geschickte An- oder Ausformung wie anhand von Fig. 23 verdeutlicht ist. Von basal sind die entsprechenden Leisten deutlich zu erkennen.

Insgesamt gesehen verdeutlichen die Fig. 1 - 25, dass sehr vielseitig einsetzbare Ersatzzähne 5 geschaffen sind, die sowohl die obere Zahnreihe 2 wie die untere Zahnreihe 3 bilden können, bzw. dort nicht mehr vorhandene natürliche Zähne ersetzen können. Außerdem ist so die Möglichkeit geschaffen, vollständige Zahnprothesen 1 zu verwirklichen, bei denen die einzelnen Schneidezähne 10, die Eckzähne 11, die Prämolaren 12, 13 und auch die Molaren 14, 15 in die Kunststoffmasse 9 so eingeformt sind, dass sie einem natürlichen Gebiss nahezu entsprechen, insbesondere auch dann, wenn die Oberflächenstruktur 33 entsprechend wiedergegeben ist, wie auch die besondere Ausbildung der Kaufläche 6.

Alle genannten Merkmale, auch die den Zeichnungen allein zu entnehmenden, werden allein und in Kombination als erfindungswesentlich angesehen.

## Patentansprüche

1. Zahnersatz für die Wiederherstellung der geschlossenen Zahnreihen (2, 3) und damit der Kaufunktion, bestehend aus einzelnen oder Gruppen von Ersatzzähnen (5), die mit den noch vorhandenen Zähnen verbindbar oder zu Teil- oder Ganzprothesen zusammensetztbar sind, wobei die einzelnen Ersatzzähne (5) aus Kunststoff, Porzellan o. ä. wirkendem Material hergestellt sind, wobei
die Ersatzzähne (5) mit multifunktionalen Kauflächen (6) nach natürlichem Vorbild ausgerüstet sind, ein vergrößertes Volumen aufweisen und einen ein Durchscheinen der Zahnhälse (8) verhinderden, bukkal abgesetzten Zahnhals (27) aufweisend ausgebildet sind, und wobei die Höcker (22) eine Neigung aufweisen, die von den Prämolaren (12, 13) zu den Molaren (14, 15, 16) abnimmt.

2. Zahnersatz nach Anspruch 1,
**dadurch gekennzeichnet,**
**dass** die zentralen Kontaktpunkte (18, 19) der Kaufläche (6) auf gleichem Niveau bezüglich Randleisten (20) und auch Grube (21) liegend ausgebildet sind.

3. Zahnersatz nach einem der vorhergehenden Ansprüche,
**dadurch gekennzeichnet,**
**dass** die distalen Randleisten (20) der Unterkiefer-Prämolaren (12, 13) erhöht ausgebildet sind.

4. Zahnersatz nach einem der vorhergehenden Ansprüche,
**dadurch gekennzeichnet,**
**dass** die palatinalen Höcker (22) der Oberkiefer-Prämolaren (12', 13') mesialisiert ausgebildet sind.

5. Zahnersatz nach einem der vorhergehenden Ansprüche,
**dadurch gekennzeichnet,**
**dass** die Höcker-Fossa- und die Höcker-Randleisten-Beziehungen aufeinander abgestimmt sind.

6. Zahnersatz nach einem der vorhergehenden Ansprüche,
**dadurch gekennzeichnet,**
**dass** die bukkale Höckerspitze (23) des ersten Oberkiefer-Prämolaren (12') distalisiert ausgebildet ist.

7. Zahnersatz nach einem der vorhergehenden Ansprüche,
**dadurch gekennzeichnet,**
**dass** die transversale Größe des okklusalen Feldes (24) bei allen Prämolaren (12, 13) einer Garnitur gleich ist.

8. Zahnersatz nach einem der vorhergehenden Ansprüche,
**dadurch gekennzeichnet,**
**dass** bei vorhandenen natürlichen Eckzähnen (11) die Prämolaren (12, 13) eine größere Länge und die Integrierung von extrakoronalen Geschieben (28) ermöglichende Größe aufweisen.

9. Zahnersatz nach einem der vorhergehenden Ansprüche,
**dadurch gekennzeichnet,**
**dass** die Leisten (30) zur Reduzierung der Interdentalpapillen (31, 32) in Kunststoff approximal ausgebildet sind.

10. Zahnersatz nach einem der vorhergehenden Ansprüche,
**dadurch gekennzeichnet,**
**dass** die labialen Leisten (34) bei den Frontzähnen (10) enger zusammen sind als die oralen Leisten (35).

11. Zahnersatz nach einem der vorhergehenden Ansprüche,
**dadurch gekennzeichnet,**
**dass** die Labialfläche (36) bei den Frontzähnen (10) verwunden ausgebildet ist.

12. Zahnersatz nach einem der vorhergehenden Ansprüche,
**dadurch gekennzeichnet,**
**dass** die oralen Randleisten (38) der Frontzähne (10) sich nach inzisal öffnend ausgebildet sind.

13. Zahnersatz nach einem der vorhergehenden Ansprüche,
**dadurch gekennzeichnet,**
**dass** die Oralflächen (37) der Frontzähne (10) konkav gewölbt ausgebildet sind.

14. Zahnersatz nach einem der vorhergehenden Ansprüche,
**dadurch gekennzeichnet,**
**dass** der Zahnzwischenraum (40) asymmetrisch geformt ist.

15. Zahnersatz nach einem der vorhergehenden Ansprüche,
**dadurch gekennzeichnet,**
**dass** die Leisten (30) beim Frontzahn (10) zur einfachen Modellation der Interdentalpapillen (31, 32) approximale Nasen (41) aufweisen.

## Claims

1. A dental prosthesis for the reconstruction of the closed rows of teeth (2, 3) and thus of the mastication function, consisting of individual or groups of replacement teeth (5), which can be connected to the teeth still present or can be assembled to form partial or complete prostheses, wherein the individual replacement teeth (5) are produced from synthetic material, porcelain or similarly acting material, wherein the replacement teeth (5) are equipped with multifunctional masticatory surfaces (6) following the natural model, have an increased volume and are constructed having a bucally stepped dental neck (27) which prevents the dental necks (8) showing through, and wherein the cusps (22) have a gradient which decreases from the premolars (12, 13) to the molars (14, 15, 16).

2. A dental prosthesis according to Claim 1,
**characterised in that** the central contact points (18, 19) of the masticatory surface (6) are constructed lying on the same level with respect to marginal ridges (20) and also fossae (21).

3. A dental prosthesis according to one of the preceding Claims,
**characterised in that** the distal marginal ridges (20) of the lower jaw premolars (12, 13) have a raised construction.

4. A dental prosthesis according to one of the preceding Claims,
**characterised in that** the palatinal cusps (22) of the upper jaw premolars (12', 13') are constructed mesially.

5. A dental prosthesis according to one of the preceding Claims,
**characterised in that** the cusp/fossa and the cusp/marginal ridge relationships are matched to one another.

6. A dental prosthesis according to one of the preceding Claims,
**characterised in that** the buccal cusp point (23) of the first upper jaw premolars (12') are constructed distally.

7. A dental prosthesis according to one of the preceding Claims,
**characterised in that** the transversal size of the occlusal field (24) is the same in all premolars (12, 13) of a fitting.

8. A dental prosthesis according to one of preceding Claims,
**characterised in that** when natural canines (11) are present, the premolars (12, 13) have a greater length and a size which enables the integration of extracoronal attachments (28).

9. A dental prosthesis according to one of the preceding Claims,
**characterised in that** the ridges (30) are constructed approximally in the synthetic material to reduce the interdental papillae (31, 32).

10. A dental prosthesis according to one of the preceding Claims,
**characterised in that** the labial ridges (34) are closer together in the front teeth (10) than the oral ridges (35).

11. A dental prosthesis according to one of the preceding Claims,
**characterised in that** the labial surface (36) in the front teeth (10) has a twisted construction.

12. A dental prosthesis according to one of the preceding Claims,
**characterised in that** the oral marginal ridges (38) of the front teeth (10) are constructed to open incisally.

13. A dental prosthesis according to one of the preceding Claims,
**characterised in that** the oral faces (37) of the front teeth (10) are concavely curved.

14. A dental prosthesis according to one of the preceding Claims,
**characterised in that** the dental interspace (40) is asymmetrically shaped.

15. A dental prosthesis according to one of the preceding Claims,
**characterised in that** the ridges (30) in the front tooth (10) have approximal lugs (41) for the simple modelling of the interdental papillae (31, 32).

## Revendications

1. Prothèse de dent pour la restauration des rangées de dents occluse (2, 3) et par conséquent de la fonction de mastication, constituée par des prothèses de dents individuelles ou des groupes de prothèses de dents (5), qui peuvent être reliés aux dents encore existantes ou peuvent être réunis pour former des prothèses partielles ou complètes, les différentes prothèses de dents (5) étant réalisées en matière plastique, en porcelaine ou en un matériau fournissant un effet similaire, dans laquelle les prothèses de dents (5) sont équipées de surfaces de mastication multifonctionnelle (6) selon un modèle naturel, possèdent un volume accru et sont agencées de manière à comporter un collet (27) étagé côté buccal qui empêche une transparence des collets (8) des dents et dans laquelle les saillies (22) possèdent une inclinaison, qui diminue depuis les prémolaires (12, 13) jusqu'aux molaires (14, 15, 16).

2. Prothèse de dent selon la revendication 1, **caractérisée en ce que** les points de contact centraux (18, 19) de la surface de mastication (6) sont formées au même niveau par rapport à des rebords marginaux (20) et également à la cavité (21).

3. Prothèse de dent selon l'une des revendications précédentes, **caractérisée en ce que** les rebords marginaux et distaux (20) des prémolaires (12, 13) de la mâchoire inférieure sont agencés en étant surélevés.

4. Prothèse de dent selon l'une des revendications précédentes, **caractérisée en ce que** les saillies palatinales (22) des prémolaires (12', 13') de la mâchoire supérieure sont agencées en étant décalées du centre.

5. Prothèse de dent selon l'une des revendications précédentes, **caractérisée en ce que** les relations saillies-cavités et les relations saillies-rebords marginaux sont accordées entre elles.

6. Prothèse de dent selon l'une des revendications précédentes, **caractérisée en ce que** la pointe de saillie buccale (23) de la première prémolaire (12') de la mâchoire supérieure est agencée en étant située sur le côté distal.

7. Prothèse de dent selon l'une des revendications précédentes, **caractérisé en ce que** la grandeur transversale du champ occlusal (24) est la même pour toutes les prémolaires (12, 13) d'une parure.

8. Prothèse de dent selon l'une des revendications précédentes, **caractérisée en ce que** dans le cas de canines naturelles présentes (11), les prémolaires (12, 13) possèdent une longueur supérieure et ont une taille permettant l'intégration d'attaches extracoronales (28).

9. Prothèse de dent selon l'une des revendications précédentes, **caractérisée en ce que** les bords (30) sont agencés d'une manière approximale en matière plastique, pour réduire les papilles inter-dentaires (31, 32).

10. Prothèse de dent selon l'une des revendications précédentes, **caractérisée en ce que** les bords labiaux (34) dans le cas des dents de devant (10) sont réunies en étant plus serrées que les bords oraux (35).

11. Prothèse de dent selon l'une des revendications précédentes, **caractérisée en ce que** la surface labiale (36) pour les dents de devant (10) est agencée avec une configuration gauchie.

12. Prothèse de dent selon l'une des revendications précédentes, **caractérisée en ce que** les bords marginaux oraux (38) des dents de devant (10) sont agencés de manière à s'ouvrir d'une façon incisale.

13. Prothèse de dent selon l'une des revendications précédentes, **caractérisée en ce que** les surfaces orales (37) des dents de devant (10) sont agencées avec une courbure concave.

14. Prothèse de dent selon l'une des revendications précédentes, **caractérisée en ce que** l'espace intercalaire (40) entre les dents possède une forme dissymétrique.

15. Prothèse de dent selon l'une des revendications précédentes, **caractérisée en ce que** dans le cas de la dent de devant (10), les bords (30) comportent des becs approximaux (41) pour la modélisation simple des papilles inter-dentaires (31, 32).
